# DEMANDE DE BREVET EUROPEEN

(11) **EP 0 738 772 A1**
(43) Date de publication de la demande: **23.10.1996**
(21) Numéro de dépôt: 96400688.6
(22) Date de dépôt: 29.03.1996
(51) Int. Cl.: C09K 5/04, C09K 3/30

(54) **Mélanges pseudo-azéotropiques à base de difluorométhane et de pentafluorodiméthyléther, et leurs applications comme fluides frigorigènes**

(30) Priorité: 20.04.1995 FR 9504723
(71) Demandeur: ELF ATOCHEM S.A., 92800 Puteaux (FR)
(72) Inventeur: Macaudiere, Sylvie, 92600 Asnieres (FR)
(74) Mandataire: Leboulenger, Jean

(57) **Abrégé**

Pour remplacer le chlorodifluorométhane dans les systèmes de réfrigération ou de conditionnement d'air, l'invention propose d'utiliser comme fluide frigorigène un mélange contenant du difluorométhane, du pentafluorodiméthyléther et au moins un composé fluoré choisi dans le groupe constitué par le 1,1,1,2 (ou 1,1,2,2)-tétrafluoroéthane, le 1,1,1-trifluoroéthane, le 1,1-difluoroéthane, le fluoroéthane, le 1,1,1,2,3,3,3 (ou 1,1,1,2,2,3,3)-heptafluoro-propane et le 1,1,1,2,2-pentafluoropropane.

## Description

La présente invention concerne le domaine de la réfrigération et a plus particulièrement pour objet des mélanges pseudo-azéotropiques de fluides frigorigènes n'ayant pas ou peu d'action sur l'environnement, pour remplacer les chlorofluorocarbures (CFC) ou hydrochlorofluorocarbures (HCFC) dans les systèmes de réfrigération ou de conditionnement d'air (air conditionné ou pompe à chaleur).

Dans les systèmes exploités en conditionnement d'air, on opère selon un cycle thermodynamique défini généralement par une température d'évaporation comprise entre 0 et 10°C (le plus souvent 7°C), une température de condensation entre 30 et 60°C, un sous-refroidissement du liquide de l'ordre de - 5°C et une surchauffe des vapeurs d'au moins 10°C.

Le fluide frigorigène couramment utilisé en conditionnement d'air est le chlorodifluorométhane (appelé HCFC-22). Or, il est maintenant établi qu'à cause de leur action sur l'ozone, les HCFC et en particulier le HCFC-22 devront à plus ou moins longue échéance être remplacés par des fluides frigorigènes n'ayant plus d'action sur la couche d'ozone.

Pour remplacer le HCFC-22 dans les installations de conditionnement d'air, le substitut doit présenter des propriétés thermodynamiques (en particulier une capacité frigorifique) égales à, voire meilleures que, celles du HCFC-22 et ceci tout en conservant une bonne efficacité et des niveaux de pression raisonnables. D'autre part, pour la bonne stabilité du produit et la durabilité du matériel, il est souhaitable que la température de refoulement n'excède pas celle du HCFC-22 de plus de 5°C environ. Enfin, pour minimiser les problèmes de distillation dans le circuit et de maintenance, il est souhaitable que le mélange présente un comportement pseudo-azéotropique.

Le difluorométhane (HFC-32) et le pentafluorodiméthyléther (E-125) n'ont, comparativement aux CFC et HCFC, aucune action sur l'ozone. Cependant, le HFC-32 présente l'inconvénient majeur d'être inflammable. Le E-125 (CF₃-O-CHF₂), composé ininflammable, présente de trop grandes pertes de capacité frigorifique visà-vis du HCFC-22.

Les mélanges binaires de HFC-32 et de E-125 selon la publication WO 9314174 conduisent à un bon compromis en terme d'efficacité et de capacité frigorifique, mais ces mélanges présentent des augmentations de pressions très importantes qui nécessitent de profondes modifications des systèmes de réfrigération et de conditionnement d'air.

II a maintenant été trouvé que les mélanges contenant du difluorométhane, du pentafluorodiméthyléther et au moins un composé choisi parmi les fluides du Tableau 1 suivant présentent un comportement pseudo-azéotropique.

**TABLEAU 1**

| **Fluide frigorigène** | **Nom chimique** | **Point d'ébullition (°C)** |
|---|---|---|
| HFC-143a | 1,1,1-trifluoroéthane | - 47,4 |
| HFC-161 | Fluoroéthane | - 37,7 |
| HFC-134a | 1,1,1,2-tétrafluoroéthane | - 26,4 |
| HFC-152a | 1,1-difluoroéthane | -25,8 |
| HFC-134 | 1,1,2,2-tétrafluoroéthane | - 19,7 |
| HFC-227ea | 1,1,1,2,3,3,3-heptafluoropropane | - 18,3 |
| HFC-227ca | 1,1,1,2,2,3,3-heptafluoropropane | - 16,3 |
| HFC-245cb | 1,1,1,2,2-pentafluoropropane | -18,3 |

Les compositions selon l'invention sont choisies de telle sorte que les mélanges présentent un comportement pseudo-azéotropique, une forte capacité frigorifique, et une diminution de la tension de vapeur par rapport aux mélanges binaires HFC-32/E-125.

Les mélanges selon l'invention peuvent donc être utilisés dans les systèmes d'air conditionné, notamment pour le remplacement du HCFC-22.

Parmi les mélanges selon l'invention, les mélanges tout particulièrement préférés ont les compositions pondérales suivantes :
■ 5 à 85 % (de préférence de 15 à 40 %) de HFC-32, 5 à 75 % (de préférence 50 à 60 %) de E-125 et de 5 à 80 % (de préférence 5 à 30 %) de HFC-143a.
■ 5 à 85 % (de préférence 20 à 35 %) de HFC-32, 5 à 90 % (de préférence 55 à 70 %) de E-125 et de 5 à 60 % (de préférence 5 à 10 %) de HFC-161.
■ 5 à 90 % (de préférence 25 à 40 %) de HFC-32, 5 à 90 % (de préférence 50 à 60 %) de E-125, et de 5 à 20 % (de préférence 5 à 15 %) de HFC-152a.
■ 5 à 90 % (de préférence 25 à 50 %) de HFC-32, 5 à 90 % (de préférence 30 à 60 %) de E-125, et de 5 à 25 % de HFC-134a.
■ 5 à 90 % (de préférence 33 à 50 %) de HFC-32, 8 à 93 % (de préférence 42 à 60 %) de E-125, et de 2 à 7 % de HFC-134.
■ 5 à 90 % (de préférence 25 à 50 %) de HFC-32, 5 à 90 % (de préférence 15 à 60 %) de E-125 et de 5 à 35 % de HFC-227ea.
■ 5 à 90 % (de préférence 25 à 50 %) de HFC-32, 5 à 90 % (de préférence 25 à 60 %) de E-125 et de 5 à 25 % de HFC-227ca.
■ 25 à 90 % (de préférence 25 à 50 %) de HFC-32, 5 à 60 % (de préférence 30 à 60 %) de E-125 et de 5 à 20 % de HFC-245cb.

Les exemples suivants illustrent l'invention sans la limiter.

### EXEMPLE 1

Le Tableau 2 donne l'écart entre les températures de bulle (Tb) et de rosée (Tr) à pression atmosphérique de différents mélanges ternaires de HFC-32, E-125 et d'un composé A choisi parmi les HFC-143a, 161, 134a, 152a, 134, 227ea, 227ca et 245cb.

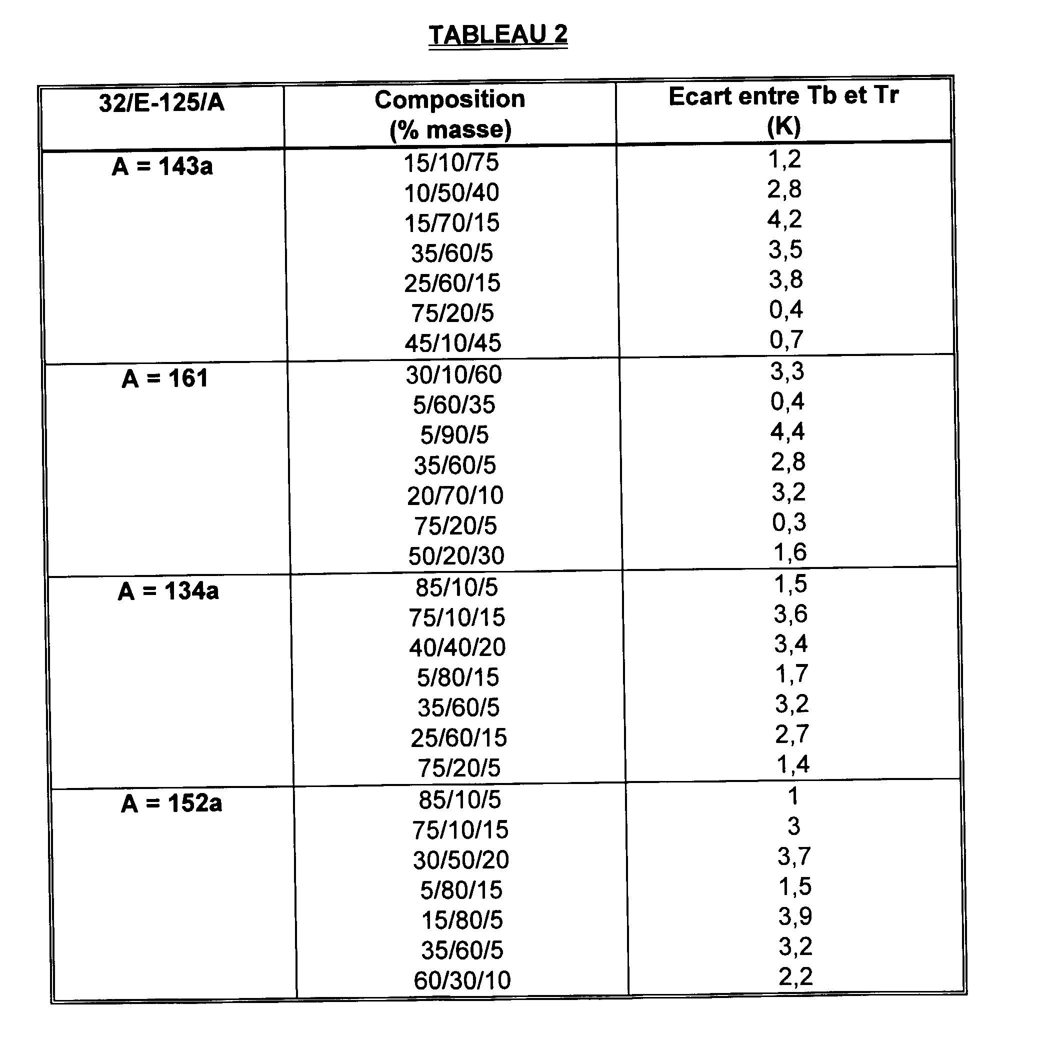

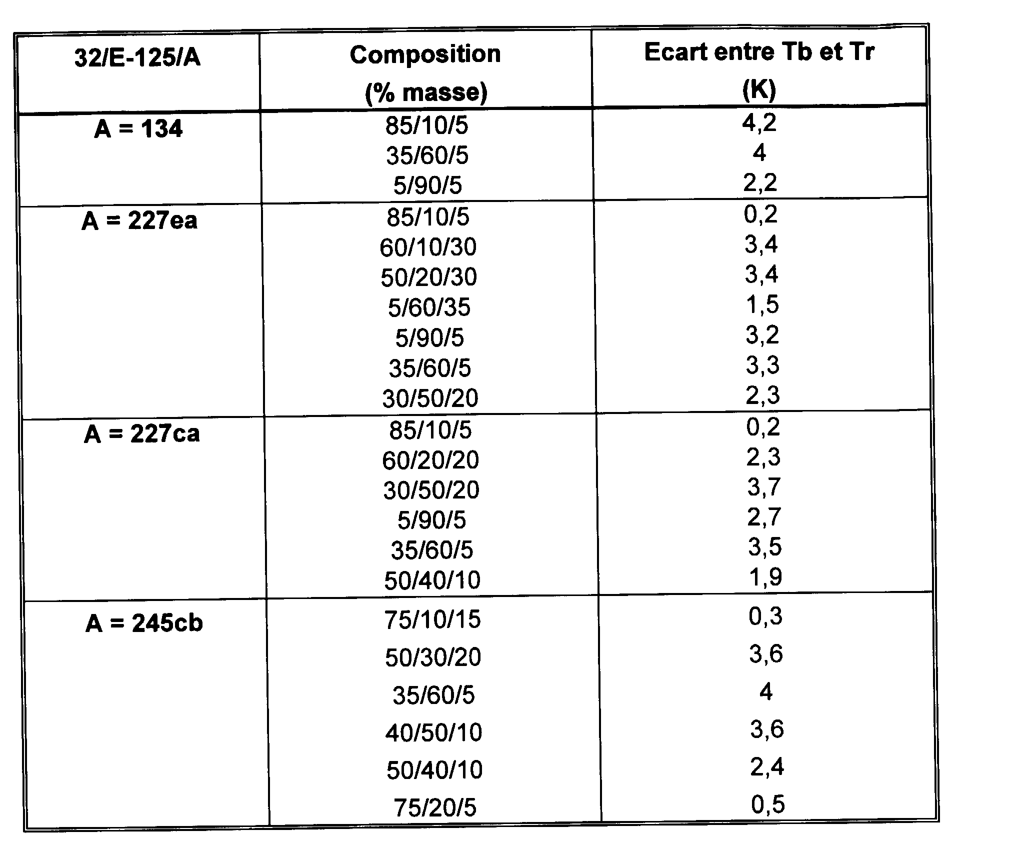

Les données indiquées montrent un faible glissement de température à pression atmosphérique et confirment ainsi la pseudo-azéotropie des mélanges étudiés.

### EXEMPLE 2

Cet exemple illustre l'utilisation des mélanges selon l'invention comme fluides frigorigènes. Leurs performances thermodynamiques ont été comparées à celles du HCFC-22 pour un cycle thermodynamique défini comme suit :
■ Température de condensation 43°C
■ Température d'évaporation 7°C
■ Température entrée compresseur 18°C
■ Sous-refroidissement liquide - 5K

Le Tableau 3 résume les performances thermodynamiques observées dans ces conditions pour différents mélanges selon l'invention.

**TABLEAU 3**

| **MELANGES (% masse)** | **CAPACITE* %** | **EFFICACITE* %** | **PRESSION DE CONDENSATION (bar)** |
|---|---|---|---|
| **32/E-125/143a** | | | |
| 25/60/15 | + 15 | - 6,6 | 21,2 |
| 35/60/5 | + 22 | - 6,4 | 22,2 |
| **32/E-125/161** | | | |
| 20/70/10 | + 12 | - 6 | 20,5 |
| 35/60/5 | + 23 | - 6,2 | 22,3 |
| **32/E-125/134a** | | | |
| 30/50/20 | + 14 | - 4,8 | 20,4 |
| 25/60/15 | + 11 | - 5,1 | 20 |
| 40/40/20 | + 21 | - 4,9 | 21,5 |
| 35/60/5 | + 23 | - 6,2 | 22,3 |
| **32/E125/152a** | | | |
| 35/60/5 | + 20 | - 5,6 | 21,6 |
| **32/E-125/134** | | | |
| 35/60/5 | + 18 | - 5,4 | 21,3 |
| **32/E-125/227ea** | | | |
| 50/20/30 | + 26 | - 6,2 | 22,7 |
| 40/40/20 | + 23 | - 6,4 | 22,4 |
| 30/50/20 | + 15 | - 6,5 | 21,1 |
| 25/60/15 | + 11 | - 6,6 | 20,5 |
| **32/E-125/227ca** | | | |
| 50/40/10 | + 32 | - 6,6 | 23,8 |
| 40/50/10 | + 25 | - 6,5 | 22,6 |
| 30/50/20 | + 14 | - 6,5 | 21 |
| **32/E-125/245cb** | | | |
| 40/50/10 | + 25 | - 6,7 | 22,7 |
| 50/40/10 | + 33 | - 6,9 | 24 |
| 35/60/5 | + 21 | - 6,4 | 22 |
| 50/30/20 | + 32 | - 7,3 | 24 |

| | | | |
|---|---|---|---|
| * Relativement au HCFC-22 | | | |

## Revendications

1. Mélange pseudo-azéotropique contenant du difluorométhane (HFC-32), du pentafluorodiméthyléther (E-125) et au moins un composé choisi dans le groupe constitué par le 1,1,1,2 (ou 1,1,2,2)-tétrafluoroéthane, le 1,1,1-trifluoroéthane, le 1,1-difluoroéthane, le fluoroéthane, le 1,1,1,2,3,3,3 (ou 1,1,1,2,2,3,3)-heptafluoropropane et le 1,1,1,2,2-pentafluoropropane.

2. Mélange selon la revendication 1 contenant en masse 5 à 85 % de HFC-32, 5 à 75 % de E-125, et 5 à 80 % de 1,1,1-trifluoroéthane (HFC-143a).

3. Mélange selon la revendication 1 contenant en masse 5 à 85 % de HFC-32, 5 à 90 % de E-125, et 5 à 60 % de fluoroéthane (HFC-161).

4. Mélange selon la revendication 1 contenant en masse 5 à 90 % de HFC-32, 5 à 90 % de E-125, et de 5 à 25 % de 1,1,1,2-tétrafluoroéthane (HFC-134a) ou de 1,1,1 ,2,2,3,3-heptafluoropropane (HFC-227ca).

5. Mélange selon la revendication 1 contenant en masse 5 à 90 % de HFC-32, 5 à 90 % de E-125, et de 5 à 20 % de 1,1-difluoroéthane (HFC-152a).

6. Mélange selon la revendication 1 contenant en masse 5 à 90 % de HFC-32, 8 à 93 % de E-125, et de 2 à 7 % de 1,1,2,2-tétrafluoroéthane (HFC-134).

7. Mélange selon la revendication 1 contenant en masse 5 à 90 % de HFC-32, 5 à 90% de E-125, et 5 à 35 % de 1,1,1,2,3,3,3-heptafluoropropane (HFC-227ea).

8. Mélange selon la revendication 1 contenant en masse 25 à 90 % de HFC-32, 5 à 60 % de E-125, et 5 à 20 % de HFC-245cb.

9. Mélange selon la revendication 2 contenant en masse 15 à 40 % de HFC-32, 50 à 60 % de E-125, et 5 à 30 % de HFC-143a.

10. Mélange selon la revendication 3 contenant en masse 20 à 35 % de HFC-32, 55 à 70 % de E-125, et 5 à 10 % de HFC-161.

11. Mélange selon la revendication 4 contenant en masse 25 à 50 % de HFC-32, 30 à 60 % de E-125, et 5 à 25 % de HFC-134a.

12. Mélange selon la revendication 5 contenant en masse 25 à 40 % de HFC-32, 50 à 60 % de E-125, et 5 à 15 % de HFC-152a.

13. Mélange selon la revendication 6 contenant en masse 33 à 50 % de HFC-32, 42 à 60 % de E-125, et 2 à 7 % de HFC-134.

14. Mélange selon la revendication 7 contenant en masse 25 à 50 % de HFC-32, 15 à 60 % de E-125, et 5 à 35 % de HFC-227ea.

15. Mélange selon la revendication 4 contenant en masse 25 à 50 % de HFC-32, 25 à 60 % de E-125, et de 5 à 25 % de HFC-227ca.

16. Mélange selon la revendication 8 contenant en masse 25 à 50 % de HFC-32, 30 à 60 % de E-125, et de 5 à 20 % de HFC-245cb.

17. Utilisation d'un mélange selon l'une des revendications 1 à 16 comme fluide frigorigène pour la réfrigération ou le conditionnement de l'air.
